Europäisches Patentamt

European Patent Office

Office européen des brevets

(19)

(11) Numéro de publication: **0 137 881**
**B1**

(12) **FASCICULE DE BREVET EUROPEEN**

(45) Date de publication du fascicule du brevet: **09.03.88**

(51) Int. Cl.⁴: **C 03 B 3/00,** C 03 B 5/12,
C 03 B 5/235

(21) Numéro de dépôt: **83402008.3**

(22) Date de dépôt: **14.10.83**

(54) Procédé et dispositif de fusion de matières minérales, notamment vitrifiables.

(43) Date de publication de la demande:
**24.04.85 Bulletin 85/17**

(45) Mention de la délivrance du brevet:
**09.03.88 Bulletin 88/10**

(84) Etats contractants désignés:
**AT BE CH DE GB IT LI LU NL SE**

(56) Documents cités:
**FR-A-2 281 902**
**FR-A-2 423 452**

(73) Titulaire: **ISOVER SAINT-GOBAIN**
**Les Miroirs 18, avenue d'Alsace**
**F-92400 Courbevoie (FR)**

(72) Inventeur: **Barton, James**
**56 Rue Boulainvilliers**
**F-75016 Paris (FR)**
Inventeur: **Baufume, Michel**
**28 rue Poncelet**
**F-75017 Paris (FR)**
Inventeur: **Levy, Pierre-Emanuel**
**89 avenue Secretan**
**F-75019 Paris (FR)**

(74) Mandataire: **de Toytot, Robert et al**
**SAINT-GOBAIN RECHERCHE 39 quai Lucien**
**Lefranc**
**F-93300 Aubervilliers (FR)**

EP 0 137 881 B1

Courier Press, Leamington Spa, England.

## Description

La présente invention intéresse la fusion du verre et concerne plus particulièrement un procédé et un dispositif de préparation d'une masse vitreuse sommairement élaborée telle que celle à laquelle s'applique le procédé d'affinage rapide décrit par le brevet français publié sous le n° 2 281 902.

On a décrit dans ce brevet, et plus particulièrement dans la demande de brevet français publiée sous le n° 2 423 452 et reflétant l'état de la technique correspondant aux préambules des revendications 1 et 5, un procédé de fusion de verre, selon lequel la matière à fondre, se présentant sous la forme d'éléments granulaires solides, tels que gravillons, granules, boulets, plaquettes ou pellets, chaque élément contenant essentiellement l'ensemble des composants dans les proportions nécessaires à la formation du verre, est tout d'abord soumise, dans une phase de préchauffage, à l'action de gaz chauds la portant à une température inférieure à celle du frittage, puis, pour la phase de fusion proprement dite, est déposée à la surface d'une couche mince de matière fondue de même composition et est soumise à une chauffage intensif, le mouvement de la masse fondue obtenue étant tel qu'il assure le renouvellement continu de la couche réceptrice sur laquelle sont amenés les éléments solides granulaires.

Dans les dispositifs connus se prêtant à la mise en oeuvre de ce procédé, l'alimentation en éléments solides préchauffés est obtenue par des moyens mécaniques, tels que tambours de distribution, vis sans fin, etc., qui sont généralement disposés à bonne distance de la zone de fusion proprement dite, pour leur éviter les difficultés de fonctionnement liés à une température excessive (enverrage, grippage, etc.).

Ainsi, alors qu'au regard des performances des moyens visant plus spécifiquement la fusion des matériaux préchauffés, la limite énoncée plus haut (température de préchauffage inférieure à la température de frittage) serait le plus souvent avantageusement dépassée, elle constitue, eu égard aux moyens mécaniques, d'alimentation en éléments préchauffés, un maximum à ne pas dépasser.

L'un des buts de la présente invention est de fournir un procédé permettant à la fois de s'affranchir dans une large mesure des précautions à prendre contre le risque de tels incidents, et d'optimiser le bilan énergétique global de la fusion.

L'invention a notamment pour objet un procédé de fusion de matières vitrifiables se présentant sous forme de matériaux solides granulaires, chaque élément contenant essentiellement l'ensemble des composants dans les proportions nécessaires à la formation du verre, selon lequel lesdits matériaux, après préchauffage au moyen de chaleur provenant, au moins pour partie, de l'énergie libérée dans une zone de fusion, sont amenés sur un support solide incliné, et y sont fondus à l'aide de gaz portés à un haut niveau de température et animés de vitesses élevées, la masse visqueuse obtenue étant évacuée dès sa formation et aussitôt remplacée par lesdits matériaux préchauffés, et selon lequel en outre l'amenée desdits matériaux sur ledit support solide est effectué en charge par gravité, en y constituant un talus s'entretenant par éboulement solide, et un cloisonnement est introduit dans ledit talus, à un niveau médian de sa pente, sur une profondeur de préférence réglable, délimitant la zone de fusion soumise auxdits gaz chauds animés de grandes vitesses, dans la partie aval de la pente, par rapport à la zone amont, dite de contrôle de l'éboulement solide, une partie au moins des gaz chauds émis de la zone de fusion y étant prélevée pour être introduite, au niveau de la zone de contrôle de l'éboulement solide, au sein dudit talus, afin de participer au préchauffage desdits matériaux granulaires, lesdits gaz chauds étant de préférence utilisés, avant leur introduction dans ladite zone amont, pour préchauffer l'air de combustion ajouté au combustible à brûler dans ladite zone de fusion.

L'invention a également pour objet un dispositif de fusion de matières vitrifiables se présentant sous la forme de matériaux solides granulaires, chaque élément contenant l'ensemble des composants dans les proportions nécessaires à la formation du verre, comprenant des moyens d'alimentation en matériaux granulaires amenant ceux-ci sur une sole inclinée comprise, au moins pour partie, dans une enceinte de fusion munie de brûleurs à chauffage intensif, émettant dans une direction sensiblement perpendiculaire à la surface du matériau à fondre des gaz portés à un haut niveau de température et animés de vitesses élevées, des moyens d'extraction desdits gaz chauds hors de l'enceinte de fusion et des moyens pour assurer la circulation desdits gaz chauds au travers desdits matériaux granulaires à préchauffer, et selon lequel en outre lesdits moyens d'alimentation comprennent un conduit sensiblement vertical amenant par gravité lesdits matériaux en charge sur la sole, pour y former un talus alimenté par éboulement solide, et un écran réfractaire cloisonne ledit talus à un niveau médian de sa pente, délimitant la zone de fusion, dans la partie aval, d'une zone dite de contrôle de l'éboulement solide, dans la partie amont, lesdits moyens de circulation de gaz chauds comprenant un conduit reliant la zone de fusion à la zone de contrôle de l'éboulement solide, un échangeur indirect, de préférence en série avec ledit conduit, étant disposé pour être traversé par une partie au moins desdits gaz chauds et permettant à la fois le préchauffage de l'air de combustion alimentant les brûleurs intensifs et un abaissement de la température des gaz chauds avant leur amenée au contact des matériaux granulaires du talus dans la zone dite de contrôle de l'éboulement solide.

On a déjà proposé dans le passé des dispositifs présentant une structure dont l'allure générale rappelle celle du dispositif selon l'invention, par exemple du type des fours-puits, ou des haut-fourneaux, dans lesquels la charge vitrifiable est introduire par le haut, tandis que l'air de combustion y pénètre par le bas, le produit combustible étant lui-même introduit soit par le haut en mélange avec la charge solide, soit par le bas, à l'état gazeux, séparément ou mélangé avec l'air de combustion. Le brevet anglais 314 209 préfère le procédé selon lequel la charge vitrifiable seule est introduite en haut d'une colonne formant four-puits, tandis que des "flammes" pénètrent dans le four pas le bas, lesdites flammes provenant d'une chambre de combustion ménagée au pied du four-puits, la fusion de la charge s'effectuant alors essentiellement au sein du four-puits, et non pas, comme dans le dispositif de la présente invention, exclusivement hors de la colonne dans une zone ménagée à la partie inférieure du talus d'éboulement formé par la charge solide qui s'en échappe.

Selon une caractéristique intéressant cet aspect de la présente invention, ledit écran réfractaire comprend de préférence des moyens de réglage de sa position par rapport audit talus. Certains définiront la position de l'écran dans le sens de l'épaisseur du talus, de manière à permettre à sa base soit d'affleurer la surface, pour un premier mode de fonctionnement, soit de pénétrer dans l'épaisseur même du talus, pour un second mode. Ce premier type de réglage sera ici, par convention, qualifié d'"orthogonal", tandis qu'un second type de réglage, dont la mise en oeuvre sera montrée avantageuse également, dans le cadre de l'invention, et qui permet d'ajuster la position du cloisonnement dans le sens de la pente du talus, sera qualifié de "longitudinal". En tout état de cause, ces divers moyens visent à maintenir constamment, lors du fonctionnement du dispositifs, le cloisonnement pour les gaz chauds et le rayonnement et à assurer le contrôle des éboulements superficiels de matériaux granulaires provenant de la zone amont, dite de contrôle de l'éboulement solide, permettant ainsi de maîtriser l'écoulement visqueux de la masse fondue produite dans la zone de fusion.

Selon une autre caractéristique de l'invention, le conduit d'alimentation est muni d'un registre permettant de régler le niveau de la surface du talus par rapport à la partie inférieure, ou base, dudit écran réfractaire, concurremment aux réglages de la position de celui-ci par rapport à la sole.

Selon une caractéristique spécialement avantageuse lorsque l'écran affleure la surface du talus, l'écran est muni, immédiatement en amont et le long de sa base en contact avec le talus de matériaux granulaires, de moyens de refroidissement tels que rampe de soufflage d'air ou boîte à eau, renforçant le gradient thermique au sein du talus entre la zone de fusion et la zone de contrôle de l'éboulement solide.

Il est prévu en outre, de préférence, pour ce même mode de fonctionnement selon lequel la base de l'écran affleure la surface du talus de matériaux granulaires s'éboulant de la trémie, et afin de garantir la permanence du cloisonnement que procure l'écran entre la zone de fusion et la zone de contrôle de l'éboulement solide, des moyens de déstabilisation du talus agissant entre ledit écran et ledit registre, c'est-à-dire dans ladite zone de contrôle, permettant de conserver constant le profil dudit talus, et par conséquent la position relative dudit écran par rapport audit talus. Ces moyens peuvent comprendre des outils noyés au sein du talus, par exemple un arbre transversal rotatif porteur de courtes pales, un peigne dont les dents servent de ringards, à mouvement cyclique, un vibreur, une rampe d'injection de gaz, etc., ou des organes disposés à l'extérieur du talus et ne les pénétrant que par intermittence, par exemple une herse, telle que décrite plus loin.

Selon une autre caractéristique du dispositif selon l'invention, la sole sur laquelle les matériaux granulaires contenus dans la trémie s'éboulent en talus est avantageusement disposée de manière que sa surface en contact avec lesdits matériaux présente une pente dirigée dans le même sens que la pente du talus, d'une valeur de préférence de l'ordre de celle de la pente du talus d'éboulement naturel desdits matériaux. A cet effet, il est avantageusement prévu des moyens de réglage de la pente de ladite sole, permettant de l'ajuster par rapport à ladite pente naturelle.

Dans une forme préférée de réalisation, ladite sole inclinée est constituée d'une grille présentant des ouvertures de dimensions avantageusement telles qu'elles correspondent à un refus d'au moins 95% en poids des matériaux granulaires utilisés.

Au-dessous de ladite grille, l'invention prévoit en outre des moyens de circulation gazeuse, par soufflage et/ou aspiration, susceptibles d'être appliqués à tels ou tels secteurs de la grille, grâce à un cloisonnement de celle-ci.

L'invention prévoit également des moyens d'aspiration de gaz chauds permettant un prélèvement dans l'enceinte de fusion, en vue de réinjection en amont, au sein de la masse de matériaux granulaires, après un refroidissement obtenu éventuellement par dilution, pour effectuer le préchauffage et/ou le séchage desdits matériaux.

Une telle réinjection sera avantageusement ménagée au niveau de la zone de contrôle d'éboulement, c'est-à-dire dans laquelle s'épanouit le talus d'éboulement, avec pour délimitation vers l'aval l'écran, et vers l'amont le conduit d'alimentation.

Les gaz chauds prélevés dans l'enceinte de fusion peuvent également, pour partie, traverser un échangeur indirect, par exemple à tubes, disposé à l'intérieur du conduit d'alimentation en éléments granulaires, évitant ainsi les risques de colmatage liés à la présence éventuelle de fines.

La présente invention, comme on le montrera par les exemples concrets décrits ci-après en référence aux dessins, permet d'obtenir une bonne maîtrise de l'enfournement du matériau à fondre, ainsi que de son préchauffage, associée à une récupération importante de la chaleur sensible des gaz issus de l'enceinte de fusion.

Ainsi, et grâce au renouvellement très rapide des matériaux soumis à l'action des brûleurs dans l'enceinte de fusion, et au très faible volume de cette dernière pour une production donnée, le coût en énergie de ladite production est très faible.

Un autre avantage de l'invention réside dans le lien très direct entre la puissance thermique injectée dans l'enceinte de fusion et le débit de la matière fondue produite, ce qui permet d'ajuster ce dernier par le seul réglage du débit du combustible fourni aux brûleurs, du moins pour les régimes de production de l'ordre du régime nominal.

S'appliquant à des matériaux granulaires de natures très diverses, et autorisant une conduit très souple des installations, leur faible inertie permettant une mise en régime très rapide, l'invention intéresse de nombreux secteurs de l'industrie verrière, et notamment de petites unités de production, travaillant de manière discontinue, par exemple dans le domaine du fibrage pour isolation.

Certaines formes de réalisation de dispositifs selon l'invention seront maintenant décrités par référence aux dessins qui représentent:

—Figure 1: une vue en coupe, selon son plan de symétrie vertical, d'un dispositif selon l'invention, sur laquelle apparaissent les principaux organes nécessaires à son fonctionnement au régime nominal;

—Figure 2: une vue de dessus de ce même dispositif, en coupe selon le plan horizontal II—II' de la figure 1, complétant la définition de la forme de certain organes;

—Figure 3: une vue partielle, en coupe, d'un dispositif semblable à celui représenté par la figure 1, mais comportant certains organes complémentaires utiles pour faire fonctionner l'installation sous la faibles tirées.

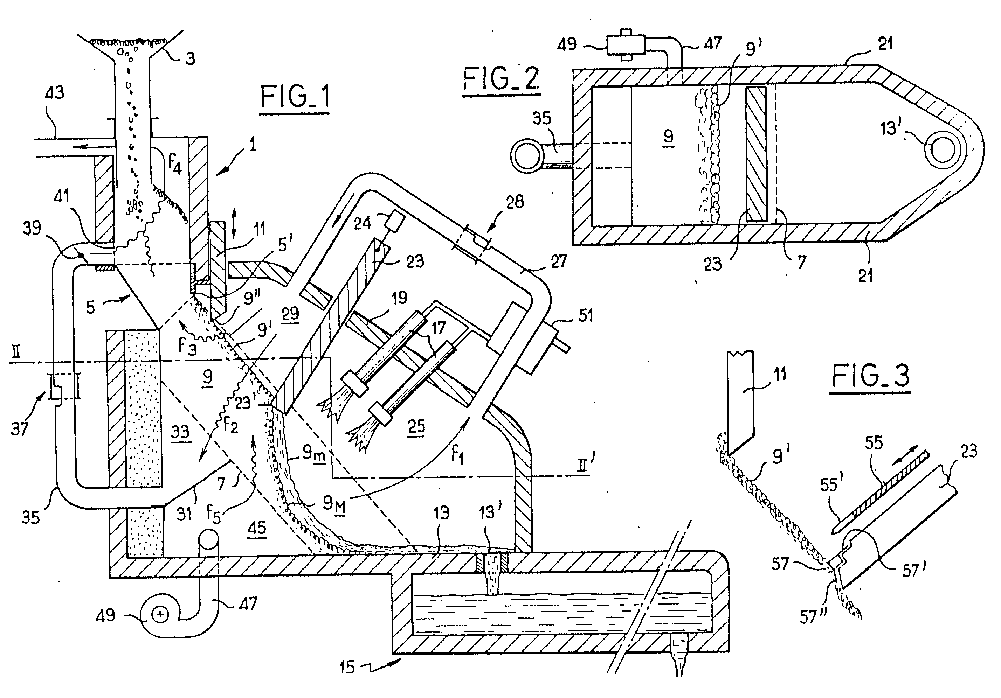

La figure 1 représente un dispositif selon l'invention, comprenant une colonne verticale 1, dont la partie supérieure est reliée à une trémie d'alimentation 3, recevant elle-même les matériaux granulaires d'un organe d'alimentation, tel que distributeur vibrant, non représenté. Au pied de la colonne est disposée une embase d'alimentation 5, débouchant au-dessus d'une sole inclinée 7, amovible et de préférence réglable en inclinaison, en tôle épaisse d'acier réfractaire, perforée de trous, sur laquelle les matériaux granulaires s'éboulent en un talus 9 dont l'épaisseur peut être réglée par un registre 11, mobile verticalement. Au cours des manoeuvres du registre 11, la surface 9' du talus 9 se déplace parallèlement à elle-même, avec un extremum haut 9'', dit "surface enveloppe", défini dans le cas de la figure 1 par la position de la lèvre inférieure 5' de l'embase d'alimentation 5, registre 11 escamoté vers le haut, et ceci de telle manière qu'il ne puisse se produire un éboulement solide atteignant l'extrémité aval, munie du déversoir 13', du support réfractaire fixe 13, sur lequel repose la sole inclinée 7, éboulement qui se traduirait par l'introduction dans le bassin d'affinage et de conditionnement 15, situé encore en aval, de matériaux granulaires insuffisamment fondus.

Au-dessus du talus 9 sont disposés des brûleurs intensifs 17, au travers d'une voûte 19 qui, avec le support fixe 13, les parois latérales 21 (fig. 2) et un écran mobile 23, disposé en amont des brûleurs, comportant des moyens 24 de réglage de la position de sa base 23' par rapport au talus 9, délimitent une chambre de fusion 25. Cette chambre communique vers aval, par le déversoir 13', avec le bassin d'affinage et de conditionnement 15, et vers l'amont, par le conduit de dilution 27, qui comporte un ouvreau à tiroir de réglage de dilution 28, avec une chambre de contrôle et régularisation d'éboulement 29. Les moyens 24 comprennent par exemple une noix à vis, montée sur un axe horizontal et parallèle à la surface du talus, assurant ainsi les réglages de l'écran dits plus haut orthogonal et longitudinal.

Au-dessous de la grille 7 peuvent être disposés des caissons de soufflage ou de prélèvement gazeux intéressant tels ou tels secteurs particuliers de la grille. La fig. 1 montre une paroi 31, éventuellement amovible et de position réglable, délimitant un caisson de prélèvement 33, ainsi qu'un conduit de dilution 35, comportant un ouvreau 37 de réglage de dilution et un papillon 39 de réglage de débit, qui permettent d'introduire, au travers de la grille 41, au sein des matériaux granulaires contenus dans la partie médiane de la colonne 1 servant de préchauffer, des gaz prélevés au-dessous de la grille 7, et dont la température peut être ajustée au niveau souhaité.

Un conduit 43, relié à un ventilateur d'extraction non représenté, par l'intermédiaire d'un cyclone, également non représenté, permet de créer le mouvement des gaz chauds au sein du dispositif selon la représentation figurée par les flèches: les fumées des brûleurs sont évacuées de la chambre de fusion 25, comme figuré par la flèche f1, au moyen du conduit de dilution 27, vers la chambre de contrôle et régularisation d'éboulement 29, où elles se divisent en deux flux, l'un traversant le talus 9 et la grille 7 selon la flèche et l'autre remontant vers la colonne au travers de l'embase d'alimentation 5, selon la flèche f3. Le flux f2, éventuellement dilué lors de son passage par le conduit de dilution 35, et le flux f3 se rejoignent selon f4 pour être évacués vers l'extérieur par le ventilateur d'extraction, après avoir cédé la plus grande partie de leur chaleur sensible aux matériaux granulaires admis sur le talus 9.

Il est prévu également une arrivée d'air frais au-dessous de la grille 7, au niveau d'un caisson de soufflage 45, séparé du caisson de prélèvement 33 par la paroi 31, et alimenté par le conduit 47 et le ventilateur 49. Il est ainsi possible de maîtriser la température de la grille 7 au droit de la chambre de fusion 25.

Il est prévu aussi d'alimenter les brûleurs 17 en air de combustion préchauffé, par exemple grâce à un échangeur 51 monté sur le conduit 27 d'extraction de fumées de la chambre de fusion 25.

Tel qu'il vient d'être décrit, le dispositif selon l'invention se prête tout spécialement à un fonctionnement selon le mode dit "en recouvrement", c'est-à-dire dans lequel la base 23' de l'écran 23 pénètre notablement dans le talus. On observe alors, sous l'effet du flux thermique émis par les brûleurs, la formation d'une excavation, dont la paroi est formée d'une "peau" visqueuse, dans la partie du talus située immédiatement à l'aval de ladite base 23'. Cette excavation se creuse jusqu'au moment où le poids de la charge de matériaux granulaires la surmontant vient à rompre cette "peau", formant une "avalanche" qui comble l'excavation, en général seulement partiellement du fait de l'état de ramollissement commençant de certains éléments de l'avalanche. Il s'établit ainsi de soi-même un régime d'avalanches d'amplitude et de fréquence relativement régulières, dépendant notamment de la profondeur de pénétration de l'écran; l'excavation se creuse et se comble ainsi périodiquement, présentant un profil compris entre les deux profils $9_M$ et $9_m$ correspondant respectivement aux instants se situant immédiatement avant l'avalanche et immédiatement après, et aux profondeurs maximale et minimale de l'excavation.

Pour que ce régime périodique d'avalanches puisse s'établir, la profondeur de pénétration de l'écran dans le talus doit être réglée de telle manière que, lorsque se produit une avalanche, il n'y ait pas rupture du contact entre l'écran et le talus, ce qui provoquerait un passage de gaz à très hautes températures vers la zone amont, et une fusion superficielle du talus, susceptible de bloquer le processus de son éboulement. Ladite profondeur de pénétration et la longueur de la chambre de contrôle 29 doivent donc être telles que le volume de la couche de matériaux granulaires retenue par l'écran soit au moins égal, et de préférence supérieur, au volume des avalanches, c'est-à-dire au volume compris entre les profils repérés $9_M$ et $9_m$ (fig. 1).

Par ailleurs les proportions relatives des zones de fusion 25 et de contrôle de l'éboulement 29 doivent permettre la maîtrise du préchauffage effectué dans la chambre de contrôle 29, visant à la délivrance, dans la zone de fusion 25, de matériaux aussi chauds que possible, mais non collés les une aux autres.

En outre, pour garantir à tout moment l'étanchéité aux gaz chauds provenant du compartiment de fusion 25, il est souhaitable que l'épaisseur de ladite couche retenue subsistant à l'issue de chaque avalanche, c'est-à-dire ladite profondeur de pénétration, soit au moins de l'order de 3 à 5 fois la dimension moyenne des éléments granulaires (ou la plus petite dimension, c'est-à-dire l'épaisseur, dans le cas de plaquettes agglomérées, ou de calcin de verre plat).

Pratiquement, l'expérience a montré que, pour une enceinte d'allure générale rectangulaire telle que décrite précédemment (cf. Fig. 2), le rapport de l'aire de la surface de talus de la chambre de contrôle de l'éboulement 29 à celle de la chambre de fusion 25 présentait avantageusement une valeur d'au moins 1/4, de préférence comprise entre 1/3 et 2, en adoptant pour valeurs desdites aires celles de la projection desdites surfaces sur le plan de la surface enveloppe 9'', la projection prise en compte pour la zone de fusion étant limitée à la partie de ladite surface enveloppe comprise entre l'écran 23 et la sole 13.

Dans le mode de fonctionnement dit "en recouvrement", les dispositifs selon l'invention permettant d'atteindre de très hautes tirées spécifiques, et un très bon rendement de fusion. Il a été possible, en effet, à partir de calcin de verre blanc d'atteindre en régime des productions de verre fondu livré à 1300°C de l'ordre de 10 t/jour · m² de surface enveloppe du compartiment de fusion 25, cette surface étant déterminée comme indiqué ci-dessus, et pour une dépense énergétique pouvant s'abaisser à environ 0,9 kWh/kg (ou 3240 kJ/kg).

Lorsque la production visée correspond, pour un dispositif donné, à des tirées nettement inférieures à la tirée nominale citée ci-dessus, par exemple de l'ordre de la moitié, ou le cas échéant avec un matériau granulaire dont la structure se prête mal à un éboulement natural régulier, les essais effectués ont montré l'utilité de l'emploi de moyens de déstabilisation du talus d'éboulement. En effet, à défaut de ces moyens, il peut arriver que les matériaux granulaires en viennent à prendre en masse, à enverrer la base de l'écran 23 et finalement à ne plus alimenter la partie du talus située en aval dudit écran, c'est-à-dire au niveau de la chambre de fusion 25.

Pour ne pas surcharger la figure 1, il est représenté à la figure 3 l'essentiel des moyens complémentaires prévus, selon l'invention, pour donner à l'installation une bonne fiabilité de fonctionnement à faible tirée.

Comme dans le cas précédemment décrit, on utilise le registre il pour régler le niveau 9' du talus 9 en amont de l'écran 23. Alors que, dans le cas de la figure 1, l'écran 23 pénètre notablement dans le talus 9, sa base vient cette fois constamment affleurer la surface du talus, sans y pénétrer de plus de 5 fois la dimension moyenne des éléments granulaires. A cet effect, on dispose en amont et à faible distance de l'écran 23, pour jouer le rôle d'organe de déstabilisation du talus, une herse 55, disposée au-dessus de la surface 9' et parallèlement à la base de l'écran 23, et dont les dents 55', dirigées vers la surface 9' du talus, viennent cycliquement pénétrer dans ledit talus, de préférence au moins jusqu'à un niveau correspondant approximativement à la base de l'écran, puis reprennent leur position de repos, hors dudit talus.

Il est possible d'utiliser pour jouer ce même rôle, selon une variante de l'invention, un ou plusieurs ringards pénétrant dans le talus par l'amont, par exemple parallèlement à la pente du talus d'éboulement naturel, et atteignant approximativement l'aplomb de la base de l'écran.

Il est représenté en outre sur la figure 3, en amont de l'écran 23 et pratiquement en appui contre sa base, un organe de refroidissement constitué essentiellement d'une boîte à eau 57 avantageusement conçue de manière à s'ajuster au-dessous de la base de l'écran 23, et à assurer à la fois des fonctions de renfort mécanique, et de protection thermique. Cette boîte à eau 57 est ici constituée d'un tube de section carrée, qui porte deux ailes 57' et 57'' s'appliquant contre, respectivement, la face amont et le dessous de la base de l'écran 23, mais d'autres formes pourraient également donner satisfaction.

Dans la configuration de fonctionnement dite "en affleurement", qui vient d'être décrite, selon laquelle l'écran réfractaire vient seulement en contact avec la surface du talus sans pénétrer notablement dans son épaisseur, et qui est mise en oeuvre avantageusement lorsqu'on vise une réduction importante de la tirée fu four, la réduction concomitante de l'énergie admise dans la zone de fusion doit, de préférence, se traduire par une réduction du flux thermique intéressant la région la plus proche de l'écran. Dans ces conditions, la tirée spécifique, rapportée au m2 de surface enveloppe de la zone de fusion, pourra néanmoins être poussée jusqu'à environ 70% de la tirée nominale atteinte dans la configuration dite "en recouvrement". Le coût énergétique de fabrication, quant à lui, sera souvent plus élevée d'environ 25 à 30% en affleurement qu'en recouvrement.

Les excellentes performances de la configuration de fonctionnement "en recouvrement" semblent pouvoir résulter non seulement du fait qu'après mise en régime, la couche de verre en fusion, qui paraît s'écouler dés le niveau de la base de l'écran et y être en quelque sorte accrochée, présente à l'action des gaz chauds une surface supérieure à celle du talus en mode "affleurement", et à fortiori de la surface enveloppe, affectant à partir de ce niveau tout d'abord une pente quasi-verticale, favorable à l'écoulement du verre très visqueux, puis une pente progressivement moindre, à mesure que, la viscosité du verre diminuant, son écoulement s'en trouve facilité, mais aussi du fait que les avalanches viennent régulièrement augmenter très considérablement la surface effectivement offerte par les matières premières à l'échange thermique avec les gaz émis par les brûleurs dans la zone de fusion 25, ce second phénomène étant lui aussi atténué dans le fonctionnement "en affleurement".

Pour compléter les données relatives à un exemple pratique de dispositif selon l'invention, il peut encore être précisé que les performances indiquées plus haut peuvent être obtenues même avec des unités de dimensions relativement réduites, correspondant par exemple à des productions journalières nominales de l'ordre de 5 tonnes.

Ainsi, une unité susceptible de fournir de telles productions nominales, et par conséquent apte à alimenter une installation de fibrage comportant une ou deux assiettes de centrifugation, a été fabriquée et a fonctionné de manière satisfaisante selon les données suivantes, en utilisant comme matière première à fondre un calcin de verre blanc silico-sodo-calcique usuel (verre plat de 3 mm d'épaisseur) de granulométrie comprise entre 0 et 20 mm, dont 70% en poids entre 5 et 15 mm:

1—Aire de la zone de contrôle de l'éboulement (surface du talus d'éboulement comprise entre registre 11 et écran 23): 0,2 $m^2$ (environ 0,35 m×0,6 m);

2—Aire de la zone de fusion (surface enveloppe 9'' comprise entre écran 23 et sole 13): 0,5 $m^2$ (environ 0,85×0,6 m);

3—Pente de la grille-support 7: 45° (angle du talus d'éboulement naturel);

4—Epaisseur maximale du talus, registre 11 escamoté, dans le compartiment de contrôle 29: 0,25 m;

5—Moyens de chauffage de la chambre de fusion 25: 12 brûleurs à propane, disposés dans une voûte distante d'environ 0,1 m de la surface enveloppe 9''.

Pour un abaissement du registre 11 réduisant l'épaisseur du talus d'environ 1 à 2 cm par rapport à l'épaisseur maximale, et un réglage de l'enfoncement de l'écran 23 ramenant l'épaisseur du talus sous le pied 23' de l'écran à environ 0,19 m, on obtient un "recouvrement" minimum de l'écran d'environ 0,04 m d'épaisseur.

Dans ces conditions, on a obtenu en régime stabilisé, pour un débit de propane de 7 $m^3$ (n) à l'heure, correspondant à une puissance d'environ 180 kW, une tirée d'environ 200 kg de verre à 1300°C à l'heure, (n) signifiant:—dans les conditions "normales" de température et pression—.

Le verre ainsi obtenu, bien que ne faisant pas appel à des matières premières composées spécialement (simple calcin de verre blanc silico-sodo-calcique) est susceptible d'être affiné par le procédé d'affinage rapide faisant l'objet du brevet français 2 281 902, n'exigeant qu'un faible apport thermique complémentaire, de l'ordre de 0,10 kWh/kg (ou 360 kJ/kg) ou par les techniques usuelles, au prix d'une dépense énergétique un peu plus élevée (0,15 kWh/kg ou 540 kJ/kg) et d'une augmentation notable du volume de l'installation, de son inertie et de son coût.

Cette même unité de fusion a permis de produire, selon le mode de fonctionnement dit "en affleurement", environ 135 kg/h de verre fondu à 1300°C, en utilisant une boîte à eau pour le refroidissement de la base 23' de l'écran et une herse actionnée de 2 à 5 fois par minute pour déstabiliser le talus en amont de l'écran, de manière à maintenir l'étanchéité entre les deux compartiments 25 et 29. La puissance dissipée correspondant à ce régime était d'environ 155 kW (6,1 $m^3$ (n)/h de propane), pour une épaisseur de talus d'environ 0,17 m au niveau de l'écran.

**Revendications**

1. Procédé de fusion de matières vitrifiables se présentant sous forme de matériaux solides granulaires, chaque élément contenant essentiellement l'ensemble des composants dans les proportions nécessaires à la formation du verre, selon lequel lesdits matériaux, après préchauffage (1, 9, 29) au moyen de chaleur provenant, au moins pour partie, de l'énergie libérée dans une zone de fusion (25), sont amenés sur un support solide incliné (7), et y sont fondus à l'aide de gaz (17) portés à un haut niveau de température et animés de vitesses élevées, la masse visqueuse obtenu étant évacuée, dès sa formation, et aussitôt remplacée par lesdits matériaux préchauffés, caractérisé en ce que l'amenée desdits matériaux sur ledit support solide (7) est effectuée en charge par gravité, en y constituant un talus (9) s'entretenant par éboulement solide, et en ce qu'un cloisonnement (23) est introduit dans ledit talus (9), à un niveau médian de sa pente, sur une épaisseur de préférence réglable, délimitant la zone de fusion (25) soumise auxdits gaz chauds animés de grandes vitesses, dans la partie aval de la pente, par rapport à la zone amont (29) dite de contrôle de l'éboulement solide, une partie au moins des gaz chauds émis de la zone de fusion (25) y étant prélevée (27) pour être introduite, au niveau de la zone amont (29), au sein dudit talus (9), afin de participer au préchauffage desdits matériaux solides granulaires, lesdits gaz chauds étant de préférence utilisés, avant leur introduction dans la zone amont (29), pour préchauffer (51) l'air de combustion ajouté au combustible à brûler (17) dans ladite zone de fusion (25).

2. Procédé de fusion selon la revendication 1, caractérisé en ce que ledit cloisonnement (23) pénètre dans l'épaisseur dudit talus (9) sur une profondeur d'au moins 3 à 5 fois la dimension moyenne des éléments granulaires ou, s'il s'agit de plaquettes agglomérées ou de calcin de verre plat, de 3 à 5 fois leur épaisseur.

3. Procédé selon l'une des revendications 1 ou 2, caractérisé en ce que le rapport de l'aire (9') de la surface du talus de la zone de contrôle de l'éboulement solide (29) à celle de la zone de fusion (25) atteint au moins 1/4.

4. Procédé selon la revendication 3, caractérisé en ce que ledit rapport présente une valeur comprise entre 1/3 et 2.

5. Dispositif de fusion de matières vitrifiables se présentant sous la forme de matériaux solides granulaires, chaque élément contenant l'ensemble des composants dans les proportions nécessaires à la formation du verre, comprenant des moyens d'alimentation (1, 3, 11) en matériaux granulaires amenant ceux-ci sur un sole inclinée (7) comprise, au moins pour partie, dans une enceinte de fusion (25), munie de brûleurs intenifs (17) émettant dans une direction sensiblement perpendiculaire à la surface du matériau à fondre des gaz portés à un haut niveau de température et animés de vitesses élevées, des moyens d'extraction (27) des gaz chauds hors de l'enceinte de fusion (25), et des moyens pour assure la circulation (27, 35, 39, 43), desdits gaz chauds au travers des matériaux granulaires à préchauffer, caractérisé en ce que lesdits moyens d'alimentation en matériaux granulaires comprennent un conduit (1) sensiblement vertical amenant par gravité lesdits matériaux en charge sur la sole (7), pour y former un talus (9) alimenté par éboulement solide, et en ce qu'un écran réfractaire (23) cloisonne ledit talus (9) à un niveau médian de sa pente, délimitant la zone de fusion (25) dans la partie aval, d'une zone (29) dite de contrôle de l'éboulement solide, dans la partie amont, lesdits moyens de circulation de gaz chauds comprenant un conduit (27) reliant la zone de fusion (25) à la zone de contrôle de l'éboulement solide (29), un échangeur indirect (51), de préférence en série avec le conduit (27) étant disposé pour être traversé par une partie au moins desdits gaz chauds et permettant à la fois le préchauffage de l'air de combustion des brûleurs intensifs (17) et un abaissement de la température des gaz chauds avant leur arrivée au contact des matériaux granulaires du talus (9) dans sa zone de contrôle de l'éboulement solide.

6. Dispositif selon la revendication 5, caractérisé en ce que ledit écran réfractaire (23) est une pièce mobile équipée de moyens (24) de réglage de sa position par rapport au talus (9).

7. Dispositif selon la revendication 6, caractérisé en ce que les moyens (24) comprennent un organe de réglage dit orthogonal, déplaçant l'écran (23) de manière que sa base (23') affleure la surface (9') du talus (9), pour un mode de fonctionnement dit "en affleurement" ou qu'elle pénètre dans l'épaisseur du talus (9), pour un mode de fonctionnement dit "en recouvrement".

8. Dispositif selon l'une quelconque des revendications 6 et 7, caractérisé en ce que les moyens (24) comprennent un organe de réglage dit longitudinal, déplaçant la base (23') de l'écran (23) dans le sens de la pente du talus.

9. Dispositif selon l'une quelconque des revendications 5 à 8, caractérisé en ce que le rapport de l'aire de la surface du talus de la zone de contrôle de l'éboulement solide (29) à celle de la zone de fusion (25) atteint au moins 1/4.

10. Dispositif selon la revendication 9, caractérisé en ce que ledit rapport présente une valeur comprise entre 1/3 et 2.

11. Dispositif selon l'une quelconque des revendications 5 à 10, caractérisé en ce que le conduit d'alimentation (1) est muni d'un registre (11) permettant de régler le niveau de la surface (9') du talus (9) dans la zone de contrôle d'éboulement (29).

12. Dispositif selon l'une des revendications 5 à 11, caractérisé en ce que l'écran (23) est muni immédiatement en amont et le long de sa base (23') de moyens de refroidissement (57) renforçant la délimitation de la zone directement soumise au chauffage intensif des brûleurs (17).

13. Dispositif selon l'une des revendications 5 à 12, caractérisé en ce qu'il comporte, dans la zone de contrôle de l'éboulement solide (29), des moyens (55) de déstabilisation du talus.

14. Dispositif selon l'une des revendications 5 à 13, caractérisé en ce que la sole (7) sur laquelle les matériaux granulaires s'éboule en talus présente une pente dirigée dans le même sens que la pente du talus d'éboulement naturel.

15. Dispositif selon la revendication 14, caractérisé en ce que la pente de la sole (7) présente une valeur de l'ordre de celle de la pente du talus d'éboulement naturel du matériau granulaire à fondre.

16. Dispositif selon l'une des revendications 14 et 15, caractérisé en ce que la sole (7) est munie de moyens de réglage de sa pente.

17. Dispositif selon l'une des revendications 5 à 16, caractérisé en ce que la sole (7) est constituée d'une grille, les ouvertures de ladite grille correspondant de préférence à un refus d'au moins 95% en poids du matériau granulaire à fondre.

18. Dispositif selon l'une des revendications 5 à 17, caractérisé en ce qu'il comprend des moyens (35, 47, 49) de circulation gazeuse, par soufflage et/ou aspiration, au travers de la grille (7).

19. Dispositif selon la revendication précédente, caractérisé par des moyens (31) de cloisonnement de la grille (7), permettant de délimiter des caissons indépendants, par exemple un caisson de soufflage (45) et un caisson de prélèvement (33).

20. Dispositif selon l'une des revendications 5 à 19, caractérisé en ce qu'une partie des gaz chauds prélevés dans la zone de fusion (35) traverse un échangeur indirect, par exemple à tubes, disposé à l'intérieur du conduit vertical d'alimentation (1) en matériaux solides granulaires.

## Patentansprüche

1. Verfahren zum Schmelzen von Glasbildnern in Form festen granulatförmigen Materials, von dem jedes Element im wesentlichen alle Komponenten in den zur Bildung von Glas notwendigen Anteilen aufweist, bei dem die Materialien nach dem Vorheizen (1, 9, 29), mittels wenigstens zum Teil von in einer Schmelzzone (25) freigesetzter Energie kommender Wärme auf eine feste geneigte Auflage (7) zugeführt werden und dort mit Hilfe von Gas (17) geschmolzen, auf einem hohen Temperaturniveau gehalten und zu erhöhter Geschwindigkeit angeregt werden, wobei die erhaltene viskose Masse von seiner Bildung evakuiert und sogleich durch vorgeheiztes Material ersetzt wird, dadurch gekennzeichnet, daß die Führung der Materialien auf der festen Auflage (7) bei der Beschickung durch Schwerkraft bewirkt wird, indem dort eine Böschung (9) geschaffen wird, die durch festen Rutsch aufrechterhalten wird, und daß ein Trennwehr (23) in diese Böschung (9) auf der Mitte ihrer Neigung bis auf eine vorzugsweise regelbare Tiefe eingeführt wird, welches die Schmelzzone (25), die den zu großer Geschwindigkeit angeregten heißen Gasen unterworfen ist, im stromabwärts liegenden Teil der Böschung gegenüber der stromaufwärts liegenden Zone (29), die unter der Kontrolle der festen Rutsche steht, begrenzt, wobei wenigstens ein Teil aus der Schmelzzone (25) kommender heißer Gase dort (27) entnommen wird, um in Höhe der stromaufwärts liegenden Zone (29) an der Brust der Böschung (9), eingeführt zu werden und so zur Vorheizung der festen granulatartigen Materialien teilzuhnehmen, wobei die heißen Gase vorzugsweise vor ihrer Zuführung in die stromaufwärts liegenden Zone (29) dazu verwendet werden, um die Verbrennungluft, die dem Brenner (17) in der Schmelzzone (25) zugeführt wird, vorzuheizen.

2. Schmelzverfahren nach Anspruch 1, dadurch gekennzeichnet, daß das Trennwehr (23) in die Dicke der Böschung (9) bis in eine Tiefe von wenigstens dem drei- bis fünffachen der mittleren Abmessungen der granulatförmigen Elemente eindringt, oder, wenn es sich um agglomerierte Plättchen oder um Flachglasscherben handelt, das drei- bis fünffache ihrer Dicke.

3. Verfahren nach einem der Ansprüche 1 oder 2, dadurch gekennzeichnet, daß das Verhältnis der Fläche (9') der Oberfläche der Böschung der Kontrollzone der festen Rutsche (29) zu der Schmelzzone (25) wenigstens 1/4 beträgt.

4. Verfahren nach Anspruch 3, dadurch gekennzeichnet, daß das Verhältnis einen Wert zwischen 1/3 und 2 hat.

5. Vorrichtung zum Schmelzen von Glasbildnern in Form von festem, körnigen Material, von den jedes Element alle Komponenten in den zur Bildung von Glas notwendigen Anteilen aufweist, mit Beschickungseinrichtungen (1, 3, 11) für körniges Material, die dieses zu einem schrägen Boden (7) führen, der wenigstens zum Teil in einer Schmelzkammer (25) mit Intensivbrennern (17) enthalten ist, die in einer Richtung im wesentlichen senkrecht zur Oberfläche des zu schmelzenden Materials auf einem hohen Temperaturniveau befindliche und zur hohen Geschwindigkeit angeregte Gase abblasen, mit Abzugsvorrichtungen (27) für heiße Gase außerhalb der Schmelzkammer (25) und mit Einrichtungen, welche die Umwälzung (27, 35, 39, 43) dieser heißen Gase über das körnige, vorzuheizende Material sicherstellen, dadurch gekennzeichnet, daß die Beschickungseinrichtungen für das körnige Material einen senkrecht stehenden Abzug (1) aufweisen, der die Materialien durch Schwerkraft dem Boden (7) zuführt, um dort eine Böschung (9) zu bilden, die über eine feste Rutsche beschickt wird, daß ein hitzebeständiges Wehr (23) die Böschung auf einem mittleren Niveau ihrer Neigung abteilt und die Schmelzzone (25) im stromabwärts liegenden Teil von einer der Kontrolle der festen Rutsche unterliegenden stromaufwärts gelegenen Zone (29) abgrenzt, daß die Umwälzeinrichtungen für die heißen Gase einen Abzug (27) aufweisen, der die Schmelzzone (25) mit der Kontrollzone (29) im Bereich der festen Rutsche verbindet, wobei ein indirekter Austauscher (51), vorzugsweise in Serie mit dem Abzug (27) so angeordnet ist, daß er von wenigstens einem Teil des heißen Gases durchströmt wird und einmal das Vorheizen der Verbrennungsluft der Intensivbrenner (17) erlaubt sowie ein Absenken der Temperatur der heißen Gase erlaubt, bevor diese in Kontakt mit dem körnigen Material der Böschung (9) in seiner Kontrollzone der festen Rutsche treten.

6. Vorrichtung nach Anspruch 5, dadurch gekennzeichnet, daß das hitzbeständige Wehr (23) ein bewegliches Teil mit Mitteln (24) zum Regeln seiner Stellung bezüglich der Böschung (9) ist.

7. Vorrichtung nach Anspruch 6, dadurch gekennzeichnet, daß die Mittel (24) ein orthogonales Regelorgan enthalten, das das Wehr (23) derart verschiebt, daß seine Grundkante (23') die Oberfläche (9') der Böschung (9) ausgleicht, wobei diese Art des Reaktionsablaufes als "Ausgleichung" oder wenn es in der Dicke der Böschung (9) eindringt, als "Bedeckung" bezeichnet wird.

8. Vorrichtung nach einem der Ansprüche 6 oder 7, dadurch gekennzeichnet, daß die Mittel (24) ein longitudinales Regelorgan aufweisen, daß die Grundkante (23') des Wehrs (23) im Sinne der Neigung der Böschung verschiebt.

9. Vorrichtung nach einem der Ansprüche 5 bis 8, dadurch gekennzeichnet, daß das Flächenverhältnis der Oberfläche der Böschung der Kontrollzone mit fester Rutsche (29) zu der der Schmelzzone (25) wenigstens 1/4 beträgt.

10. Vorrichtung nach Anspruch 9, dadurch gekennzeichnet, daß das Verhältnis einen Wert zwischen 1/3 und 2 aufweist.

11. Vorrichtung nach einem der Ansprüche 5 bis 10, dadurch gekennzeichnet, daß die Beschickungseinrichtung (1) mit einem Schieber (11) versehen ist, mit dem die Höhe der Oberfläche (9') der Böschung (9) in der Kontrollzone der Rutsche (29) regelbar ist.

12. Vorrichtung nach einem der Ansprüche 5 bis 11, dadurch gekennzeichnet, daß das Wehr (23) unmittelbar stromaufwärts und über seine ganze Grundkante (23') mit Kühleinrichtungen (57) versehen ist, die die Begrenzung der der intensiven Beheizung des Brenners (17) direkt ausgesetzten Zone verstärkt.

13. Vorrichtung nach einem der Ansprüche 5 bis 12, dadurch gekennzeichnet, daß in der Kontrollzone mit der festen Rutsche (29) Einrichtungen (55) zur Destabilisierung der Böschung vorgesehen sind.

14. Vorrichtung nach einem der Ansprüche 5 bis 13, dadurch gekennzeichnet, daß der Boden (7), auf dem das körnige Material schräg rutscht, eine Neigung entsprechend der natürlicher Böschungen aufweist.

15. Vorrichtung nach Anspruch 14, dadurch gekennzeichnet, daß die Neigung des Bodens (7) einen Wert in der Größenordnung des Wertes der natürlichen Böschung von granuliertem Schmelzgut aufweist.

16. Vorrichtung nach einem der Ansprüche 14 oder 15, dadurch gekennzeichnet, daß der Boden (7) mit Einrichtungen zum Einstellen seiner Neigung versehen ist.

17. Vorrichtung nach einem der Ansprüche 5 bis 16, dadurch gekennzeichnet, daß der Boden (7) gitterartig ausgebildet ist, wobei die Öffnungen des Gitters vorzugsweise so ausgebildet sind, daß wenigstens 95 Gew. % des körnigen Schmelzgutes zurückgehalten werden.

18. Vorrichtung nach einem der Ansprüche 5 bis 17, dadurch gekennzeichnet, daß Einrichtungen (35, 47, 49) zur Gasumwälzung durch Blasen und/oder Saugen über das Gitter (7) vorgesehen sind.

19. Vorrichtung nach dem vorhergehenden Anspruch, gekennzeichnet durch Einrichtungen (31) zum Abteilen des Gitters (7), welche die Abgrenzung unabhängiger Kästen, z.B. eines Blaskastens (45) und eines Probeentnahmekastens (33) erlauben.

20. Vorrichtung nach einem der Ansprüche 5 bis 19, dadurch gekennzeichnet, daß ein Teil der in der Schmelzzone (25) entnommenen heißen Gase einen indirekten Austauscher, z.B. einen Röhrenwärmetauscher durchströmt, der im Inneren der senkrechten Beschickungseinrichtung (1) für das körnige feste Material angebracht ist.

## Claims

1. Process for the fusion of vitrifiable substances which take the form of granular solid materials, each element essentially containing all the components and these in the proportions necessary to form glass, whereby the said materials, after being preheated (1, 9, 29) by means of heat which at least partially emanates from the energy released in a fusion zone (25), are conveyed onto an inclined solid support (7) where they are melted by means of gases (17) raised to a high level of temperature and propelled at high speeds, the viscous mass obtained being discharged once it has formed and being at once replaced by the said preheated materials, characterised in that the conveyance of the said materials onto the said solid support (7) is carried out by gravity feed, in such a way as to constitute a slope (9) which is maintained by solid slippage, and in that a partitioning (23) is introduced into the said slope (9) halfway up the gradient, over a preferably regulable thickness, bounding the fusion zone (25) which is subjected to the said high velocity heated gases, in the downstream part of the slope in relation to the upstream zone (29) which is referred to as a solid slippage control zone, at least a part of the hot gases issuing from the fusion zone (25) being drawn therefrom (at 27) to be introduced at the level of the upstream zone (29) to the heart of the said slope (9) in order to participate in the preheating of the said granular solid materials, the said heated gases being preferably used, prior to being introduced into the upstream zone (29), for preheating (51) the combustion air added to the fuel to be burned (17) in the said fusion zone (25).

2. Fusion process according to Claim 1, characterised in that the said partitioning (23) penetrates into the thickness of the said slope (9) over a depth of at least three to five times the average dimension of the granular elements or, in the case of agglomerated chips or flat glass scraps, three to five times their thickness.

3. Process according to one of Claims 1 or 2, characterised in that the ratio of the area (9') of the surface of the slope in the solid slippage control zone (29) to that of the fusion zone (25) is at least 1:4.

4. Process according to Claim 3, characterised in that the said ratio has a level comprised between 1/3 and 2.

5. Apparatus for smelting vitrifiable materials which take the form of granular solid materials, each element containing all the components in the proportions necessary to the formation of glass, comprising means (1, 3, 11) for feeding granular materials, conveying these latter onto an inclined bed (7) comprised at least partially in the smelting enclosure (25), provided with intense-output burners (17) emitting in a direction substantially perpendicular to the surface of the material to be smelted, gases which are raised to a high level of temperature and which are propelled at high velocities, means (27) for extracting heated gases from the smelting enclosure (25) and means (27, 35, 39, 43) for ensuring circulation of the said heated gases through granular materials which are to be preheated, characterised in that the said granular material supply means comprise a substantially vertical duct (1) which by gravity conveys the said materials in a batch onto the bed (7) to form thereon a slope (9) which is fed by solid slippage, and in that a refractory screen (23) partitions the said slope (9) halfway up the slope, defining the fusion zone (25) in the downstream part, and a so-called solid slippage control zone (29) in the upstream part, the said heated gas circulating means comprising a duct (27) connecting the fusion zone (25) to the solid slippage control zone (29), an indirect exchanger (51) preferably in series with the duct (27) being disposed to be traversed by at least a part of the said heated gases and at the same time permitting preheating of the combustion air of the high intensity burners (17) and a lowering of the temperature of the heated gases before they come in contact with the granular materials on the slope (9) in the solid slippage control zone.

6. Apparatus according to Claim 5, characterised in that the said refractory screen (23) is a movable member provided with means (24) for regulating its position in relation to the slope (9).

7. Apparatus according to Claim 6, characterised in that the means (24) comprise a so-called orthogonal control member which displaces the screen (23) in such a way that its base (23') is flush with the surface (9') of the slope (9) for a so-called "flush" functioning mode in which it penetrates into the thickness of the slope (9), for a so-called "covering" mode of operation.

8. Apparatus according to either of Claims 6 or 7, characterised in that the means (24) comprise a so-called longitudinal regulating member displacing the base (23') of the screen (23) in the direction of the gradient of the slope.

9. Apparatus according to any one of Claims 5 to 8, characterised in that the ratio of the area of the surface of the slope of the solid slippage control zone (29) to that of the fusion zone (25) reaches at least 1:4.

10. Apparatus according to Claim 9, characterised in that the said ratio has a level comprised between 1/3 and 2.

11. Apparatus according to any one of Claims 5 to 10, characterised in that the supply duct (1) is provided with a register (11) which makes it possible to regulate the level of the surface (9') of the slope (9) in the slippage control zone (29).

12. Apparatus according to one of Claims 5 to 11, characterised in that the screen (23) is, immediately upstream and along its base (23'), provided with cooling means (57) reinforcing demarcation of the zone which is directly subject to the intense heating of the burners (17).

13. Apparatus according to one of Claims 5 to 12, characterised in that in the solid slippage control zone (29), it comprises means (55) for destabilising the slope.

14. Apparatus according to one of Claims 5 to 13, characterised in that the bed (7) on which the granular materials slide down on the slope has a gradient directed in the same direction as the gradient of the natural slippage slope.

15. Apparatus according to Claim 14, characterised in that the gradient of the bed (7) has a value which is approximately that of the gradient of the natural slippage slope of the granular material to be smelted.

16. Apparatus according to one of Claims 14 and 15, characterised in that the bed (7) has means of regulating its gradient.

17. Apparatus according to one of Claims 5 to 16, characterised in that the bed (7) consists of a grille, the openings in the said grille corresponding preferably to at least 95% by weight rejection of the granular material to be smelted.

18. Apparatus according to one of Claims 5 to 17, characterised in that it comprises means (35, 47, 49) for the circulation of gases by blowing and/or vacuum, through the grille (7).

19. Apparatus according to the preceding Claim, characterised by means (31) for partitioning of the grille (7), making it possible to define independent chambers, for example a blower chamber (45) and a sampling chamber (33).

20. Apparatus according to one of Claims 5 to 19, characterised in that a part of the heated gases drawn off from the smelting zone (35) passes through an indirect exchanger, for example a tube exchanger, disposed inside the vertical duct (1) for the supply of granular solid materials.

FIG_1

FIG_2

FIG_3